# EUROPEAN PATENT APPLICATION

(11) **EP 3 121 529 A1**
(43) Date of publication of application: **25.01.2017**
(21) Application number: 15178104.4
(22) Date of filing: 23.07.2015
(51) Int. Cl.: F24J 2/14, F24J 2/52

(54) **SUPPORT STRUCTURE FOR SUPPORTING A MIRROR, SOLAR COLLECTOR ASSEMBLY WITH THE SUPPORT STRUCTURE, METHOD FOR MANUFACTURING THE SOLAR COLLECTOR ASSEMBLY AND USE OF THE SOLAR COLLECTOR ASSEMBLY FOR A SOLAR FIELD**

(71) Applicant: Siemens Concentrated Solar Power Ltd., 48091 Rosh Ha ayin (IL)
(72) Inventor: Sharon, Yigal, 90805 Mevaseret Zion (IL)
(74) Representative: Maier, Daniel Oliver

(57) **Abstract**

A support structure (1) for supporting of at least one reflector (2) for reflecting sunlight (3) with following limitations is provided: At least one support base (10), at least two fixed support elements (11) for holding the reflector (2), wherein the fixed support elements (11) are mounted to the support base (10) via a firm connection (110) and at least two flexible support elements (12) for holding the reflector (2), wherein each of the two flexible support elements (2) are mounted to the support base (10) via at least one rotatable joint (120) for a rotatable movement of the flexible support element (12) towards the support base (10). In addition, a solar collector assembly (2000) with at least one such support structure (1) for supporting of at least one reflector (2) for reflecting sunlight (3) is provided. Finally, a use of the solar collector assembly for a solar field of solar thermal power plant for converting solar energy into electrical energy is provided. With the solar field solar radiation is collected by the solar collector assemblies, transferred into thermal energy for generating steam with which a stream turbine is driven for producing electricity.

## Description

### BACKGROUND OF THE INVENTION

### 1. Field of the Invention

This invention refers to a support structure for supporting a mirror, a solar collector assembly with the support structure, a method for manufacturing the solar collector assembly and a use of the solar collector assembly.

### 2. Description of the Related Art

A solar field is a modular distributed system of solar collector assemblies (SCA) connected to each other via a system of pipes. The SCA comprises a sunlight reflecting arrangement with at least one reflector (mirror) for reflecting sunlight and with at least one reflector holders (support support structure) for holding the reflector. For instance, the reflector is a bent reflector with a parabolic shape. The reflectors and the reflector holders are connected together by gluing connection pads.

Solar radiation is focused by the parabolic reflector onto a heat collection element which is arranged in a focal line of the parabolic reflector. The heat collecting element comprises a hollow tube (heat receiver tube) through which a heat transfer fluid (HTF) is circulated. Via the heat receiver tube solar energy is absorbed. The absorbed energy is transferred to the heat transfer fluid, e.g. a thermo-oil. Via the heat transfer fluid the transferred (thermal) energy is transported to a heat exchanger where steam is generated. The steam is used to drive a turbine which is connected to a generator. By the generator electric energy is produced.

Solar reflecting arrangements (solar collector assemblies) are key elements of the solar field. The solar collector assembly comprises a support structure for supporting of at least one reflector. During and after installation of the reflector distortion of the reflector shape can occur. In addition, residual internal stress in the reflector after installation can occur, too.

There are different solutions known for solving the described problem:
- Installing the reflector directly to the reflector supports in a jig. It does not prevent the distortion phenomenon.
- Using washers made out of elastomeric material. It just partly solves the problem. In addition, this solution has low durability.
- Gluing the reflector pads to the support. It is complicated expensive and with low durability.

### SUMMARY OF THE INVENTION

It is an objective of the invention to provide a support structure for supporting of at least on reflector for reflecting sunlight. The support structure should be more reliable compared to the state of the art.

Further objectives of the invention are the providing of a respective solar collector assembly, a method for manufacturing the solar collector assembly and a use of the solar collector assembly.

These objects are achieved by the inventions specified in the claims.

A support structure for supporting of at least one reflector for reflecting sunlight with following limitations is provided: At least one support base, at least two fixed support elements for holding the reflector, wherein the fixed support elements are mounted to the support base via a firm connection and at least two flexible support elements for holding the reflector, wherein each of the two flexible support elements are mounted to the support base via at least one rotatable joint for a rotatable movement of the flexible support element towards the support base.

In addition, a solar collector assembly with at least one such support structure for supporting of at least one reflector for reflecting sunlight is provided.

Moreover, a method for manufacturing the solar collector assembly following manufacturing steps is provided:
a) Attaching a reflector to the flexible support elements such that the reflector is distant to the fixed support elements; and
b) Rotating the movable support elements around the rotatable joints such that the reflector and the fixed support elements touch each other.

Finally, a use of the solar collector assembly for a solar field of solar thermal power plant for converting solar energy into electrical energy is provided. With the solar field solar radiation is collected by the solar collector assemblies, transferred into thermal energy for generating steam with which a stream turbine is driven for producing electricity.

The support elements are support bridges. With the new concept, the reflectors are not installed directly to the support base. The reflector is connected to the four support elements which are connected to the support base. Support elements are located between the support base and the reflector. Thereby, two of the support elements bridges are welded and two are installed rotatably, e.g. with pins.

The support elements provide for the supporting of the reflector at least one support area. The form of the support area can comprise different shapes, for instance circular or square shaped. The support area is a connecting area for the reflector and the respective support element.

The two fixed support elements are immovably (firmly) mounted to the support base via the firm connection. So, these fixed elements cannot be moved. In contrast to that, the two flexible support elements are movably mounted to the support base such that they can perform a rotation. This is advantageous for the manufacturing of the solar collector assembly. In a first step, the rotator is attached to the support areas of these two flexible support elements such, that the reflector is not in touch with the support areas of the fixed support structures. Reflector an support areas of the fixed support elements are distant from each other. In the next step, the support areas and the reflector are brought together by the rotational movement of the flexible support elements.

A shape of the reflector can be different. In an embodiment the reflector is selected from the group existing of a flat reflector and a bent reflector with a reflector bending. The reflector bending comprises preferably a parabolic shape. More preferably the reflector bending is a permanent reflector bending. The resulting sunlight reflecting arrangement is used for a solar collector assembly with a parabolic trough.

The reflector can comprise different, sunlight reflecting materials. The reflector can just consist of a body out of reflecting material.

Alternatively the reflector comprises a reflector substrate on which a thin sunlight reflecting layer is attached. For instance the sunlight reflecting layer comprises silver. The reflector substrate can consist of different organic or inorganic materials.

In an embodiment the reflector substrate comprises glass. The reflector substrate is a glass sheet, onto which the sunlight reflecting layer is attached. Thereby the reflector can act as a front surface mirror or as a back surface mirror.

The glass sheet can be flat resulting in a flat reflector. Preferably the glass sheet comprises a permanent parabolic bending resulting in a bent reflector. For instance, the bent reflector comprises a parabolic shape. For introducing the bending there are different ways possible. Preferably a cold or a hot bending of the glass sheet (with annealing the glass sheet) and/or of the reflector can be carried out. Hence in a further preferred embodiment the bent reflector is selected from the group existing of a cold bent reflector and a hot bent reflector.

The support areas of the support elements can form different kinds of shapes of a (total) contact area. The total support area can be triangular shaped or circular shaped. In a preferred embodiment, the two fixed support elements and the two flexible support elements form a square shaped contact surface for the supporting of the reflector. Thereby, the two fixed support elements for an edge of the contact area. The two flexible support elements form an edge of the contact area, too.

In a preferred embodiment, the firm connection comprises a welded joint. The support base and each of the fixed support elements are welded together.

Preferably, the rotatable joint comprises pins for the rotatable movement. This is a relatively simple and reliable solution (in comparison for a respective bearing).

Preferably, each of the support elements is connected to the reflector via at least one pad. The pads form the support (connecting) areas.

The reflectors of the solar collector assembly are manufactured with high optical accuracy. For instance, four reflectors are installed in one section of the solar collector assembly (two inner reflectors and two outer reflectors).

Each reflector comprises four connection pads. The locations and the angles of the connection pads have poor repeatability. This fact causes mismatch between reflectors and the support structures.

Summarizing following advantages are provided by the invention:
- The invention provides an easy and reliable support structure of a solar collector assembly.
- The probability for the occurrence of distortion of the reflector is reduced as well as the probability for the occurrence of internal stress. The support structure matches itself to the reflector pad and does not cause distortion of the reflector.
- The optical efficiency of each reflector maintains on the solar collector assembly after installation.

### BRIEF DESCRIPTION OF THE SCHEMATIC DRAWINGS

Further features and advantages of the invention are produced from the description of a exemplary embodiments with reference to the drawings. The drawings are schematic.
Figure 1 shows a solar collector assembly in a perspective view.
Figure 2 shows a cross section of the solar collector assembly.
Figure 3 shows the solar collector assembly in a cross section.
Figure 4 shows the solar collector assembly from the backside.
Figure 5 shows a flexible support element in a perspective view.
Figure 6 shows a method for manufacturing the solar collector assembly.

Subject of the example is a support structure 1 for supporting of at least one reflector 2 for reflecting sunlight 3. The support structure 1 comprises following elements: A support base 10 and two fixed support elements 11 for holding the reflector 2. The fixed support elements 11 are mounted to the support base 10 via a firm connection 110. The firm connection is a welded joint 1101. The fixed support elements 11 are support bridges. Support base 10 and fixed support element are welded together.

In addition, there are two flexible support elements 12 (flexible support bridges) for holding the reflector 2. Each of the two flexible support elements 2 are mounted to the support base 2 via a rotatable joint 120 for a rotatable movement 120 of the flexible support element 12 towards the support base 2. The rotatable joints are pins 1201.

The two fixed support elements 11 and the two flexible support elements 12 form a square shaped contact surface 13 for the supporting of the reflector 2. Each of the support elements 11 and 12 is connected to the reflector 2 via a connection pad 14.

The support structure is used for a solar collector assembly 2000. Thereby, the reflector 2 is a bent reflector with a reflector bending 21. The reflector bending (21) comprises a parabolic shape. The solar collector assembly is a solar trough collector.

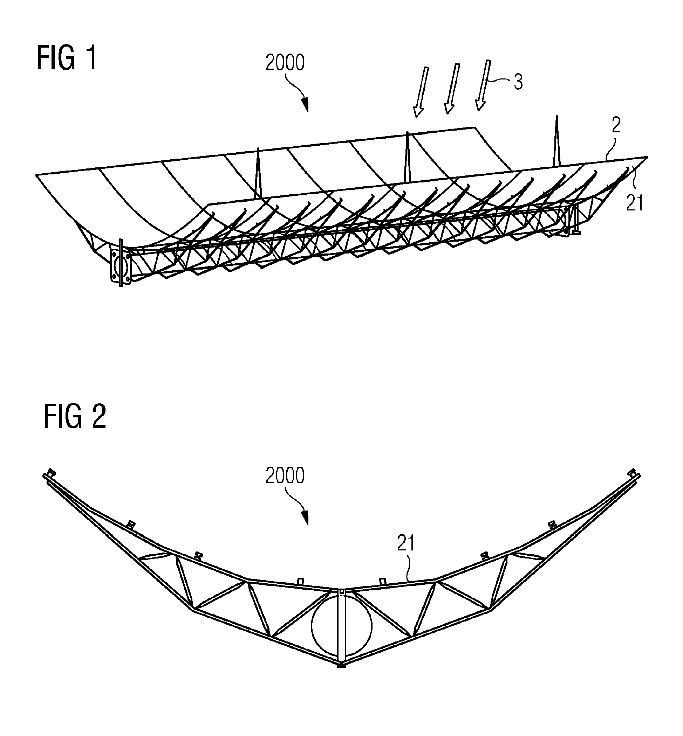

The mirrors of the solar collector assembly are manufactured with high optical accuracy. Four mirrors are installed in one section of the solar collector assembly. There are two inner and two outer mirrors (figure 1).

In each side of the section two mirrors are installed on two mirrors support structures (an inner and an outer)

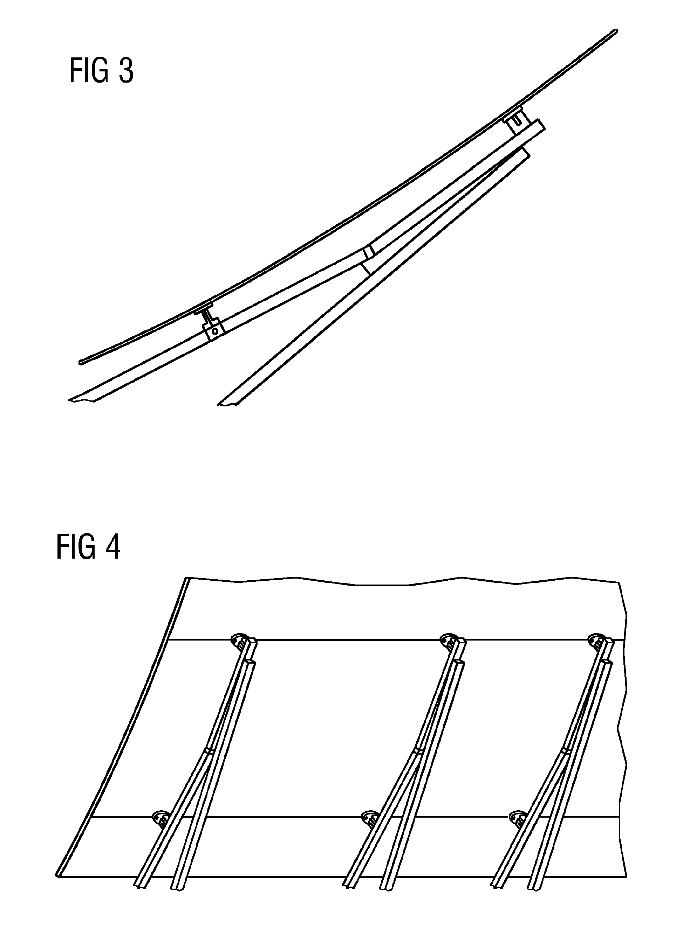

Each mirror has four connection pads (figure 4). Concerning the state of the art, the locations and the angles of the connection pads have poor repeatability. This fact causes mismatch between mirrors and the supports.

In the new concept, the mirrors are not installed directly to the support base. Four support bridges are connected to the mirror support base.

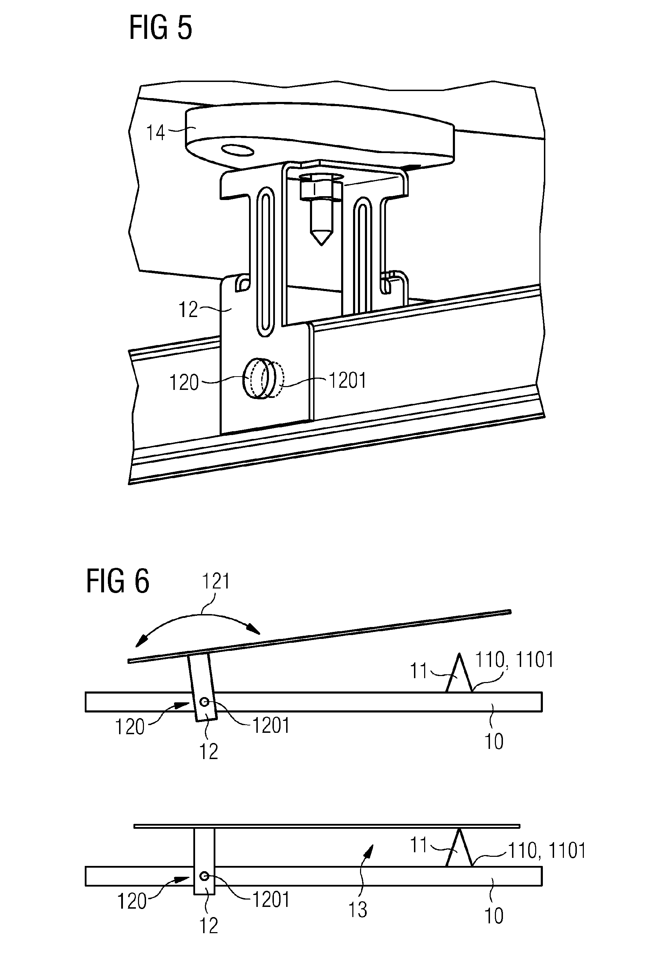

Each support bridge has a hole in its upper surface and each connection pad has internal nut (figure 5).

For the manufacturing of the solar collector assembly following manufacturing steps are carried out:
a) Attaching a reflector 2 to the flexible support (support bridges) 12 such that the reflector 2 is distant to the fixed support elements 11; and
b) Rotating 121 the movable support elements 12 around the rotatable joints 120 such that the reflector 2 and the fixed support elements 11 touch each other.

Both support bridges match themselves to the connection pad surface during tightening of the bolts. The second step is to connect the others two pads to the welded bridges.

The connection between the welded bridges and the reflector is flexible to rotation and the tightening of the bolts does not effect the mirror shape.

The resulting solar collector assembly with the support structure 1 the reflectors 2 is used for a (not shown) solar field. With the aid of the solar field solar energy is collected. The collected solar energy is transferred into thermal energy with a heat transfer fluid. This heat transfer fluid is used for the generation of steam. With the aid of the steam a steam turbine is driven for producing electricity. So, the solar collector assembly is used in a solar field of a solar thermal power plant for converting solar energy into electrical energy

## Claims

1. Support structure (1) for supporting of at least one reflector (2) for reflecting sunlight (3) with following limitations:
- At least one support base (10);
- At least two fixed support elements (11) for holding the reflector (2), wherein the fixed support elements (11) are mounted to the support base (10) via a firm connection (110); and
- At least two flexible support elements (12) for holding the reflector (2), wherein each of the two flexible support elements (2) are mounted to the support base (2) via at least one rotatable joint (120) for a rotatable movement (120) of the flexible support element (12) towards the support base (2).

2. Support structure according to claim 1, wherein the two fixed support elements (11) and the two flexible support elements (12) form a square shaped contact surface (13) for the supporting of the reflector (2).

3. Support structure according to claim 1 or 2, wherein the firm connection (110) comprises a welded joint (1101).

4. Support structure according to one of the claims 1 to 3, wherein the rotatable joint (120) comprises pins (1201) for the rotatable movement (121).

5. Support structure according to one of the claims 1 to 4, wherein each of the support elements (11, 12) is connected to the reflector (2) via at least one pad (14).

6. Solar collector assembly (2000) with at least one support structure (1) according to one of the claims 1 to 5 for supporting of at least one reflector (2) for reflecting sunlight (3).

7. Solar collector assembly (2000) according to claim 6, wherein the reflector (2) is selected from the group consisting of a flat reflector and a bent reflector with a reflector bending (21).

8. Solar collector assembly (2000) according to claim 7, wherein the reflector bending (21) comprises a parabolic shape.

9. Method for manufacturing a collector assembly (2000) according to one of the claims 6 to 8 with following manufacturing steps:
a) Attaching a reflector (2) to the flexible support elements (12) such that the reflector (2) is distant to the fixed support elements (11); and
b) Rotating (121) the movable support elements (12) around the rotatable joints (120) such that the reflector (2) and the fixed support elements (11) touch each other.

10. Use of the solar collector assembly according to one of the claims 6 to 8 for a solar field of solar thermal power plant for converting solar energy into electrical energy
